(19) Europäisches Patentamt / European Patent Office / Office européen des brevets

(11) **EP 4 679 132 A1**

(12) **DEMANDE DE BREVET EUROPEEN**

(43) Date de publication:
**14.01.2026 Bulletin 2026/03**

(21) Numéro de dépôt: **25189191.7**

(22) Date de dépôt: **11.07.2025**

(51) Classification Internationale des Brevets (IPC):
**G01S 7/48** (2006.01)   **G01S 17/66** (2006.01)
**G01S 17/46** (2006.01)

(52) Classification Coopérative des Brevets (CPC):
**G01S 7/4808; G01S 17/46; G01S 17/66**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **12.07.2024 FR 2407691**

(71) Demandeur: **Commissariat à l'Energie Atomique et aux Energies Alternatives**
**75015 Paris (FR)**

(72) Inventeurs:
• **CHAMPEAU, Bastien**
  **21120 Is-Sur-Tille (FR)**
• **PATAILLE, Etienne**
  **21120 Is-Sur-Tille (FR)**

(74) Mandataire: **INNOV-GROUP**
**209 Avenue Berthelot**
**69007 Lyon (FR)**

(54) **DISPOSITIF OPTIQUE DE SUIVI DE LA POSITION D'UN OBJET**

(57) Dispositif de détermination d'une position d'un objet, l'objet comportant un rétro-réflecteur cible, comportant :
- un émetteur laser configuré pour émettre un faisceau laser incident vers le rétro-réflecteur cible;
- un détecteur, configuré pour détecter un faisceau laser réfléchi par le rétro-réflecteur cible;
- une unité de centrage, configurée pour ajuster une position de l'émetteur laser en fonction du faisceau laser détecté;

le dispositif étant caractérisé en ce que :
- le dispositif comporte un miroir, configuré pour réfléchir le faisceau laser incident vers le rétro-réflecteur cible ;
- le dispositif comporte une unité de traitement configurée pour déterminer une position réelle du rétro-réflecteur cible, en fonction de la position et de l'orientation du miroir, et de la position virtuelle du rétro-réflecteur cible, après que le faisceau laser incident a été centré par rapport au rétro-réflecteur cible. Figure 2A

EP 4 679 132 A1

**Fig. 2A**

**Description**

**DOMAINE TECHNIQUE**

Le domaine technique de l'invention est la métrologie optique, et plus précisément le tracking (suivi de position) laser.

**ART ANTERIEUR**

Un laser tracker est un dispositif de suivi laser de haute précision utilisé pour suivre et mesurer avec précision la position d'objets en trois dimensions. Il s'agit d'un dispositif utilisé dans de nombreux domaines industriels, par exemple, et de façon non limitative, l'aérospatiale, l'automobile, la construction navale.

Un laser tracker est constitué d'un laser monté sur deux axes de rotation perpendiculaires, motorisés et équipés de codeurs angulaires. L'objet dont la position est mesurée ou suivie par le laser, et désigné ci-après la cible, est relié à un rétro-réflecteur. Le rétro-réflecteur est réalisé par trois miroirs, formant un coin de cube, montés par exemple dans une sphère. Le coin de cube est positionné au niveau du centre de la sphère. Ce type de rétro-réflecteur est désigné « SMR : Spherically Mounted Reflector : ou rétro-réflecteur à montage sphérique ». Le laser tracker est notamment capable de suivre en dynamique les déplacements du point de mesure matérialisé par le centre du rétro-réflecteur.

Grâce aux deux moteurs asservis, montés sur les deux axes de rotation, le laser tracker peut pointer son faisceau dans toutes les directions. Les asservissements des deux moteurs permettent de diriger en permanence le faisceau au centre du rétro-réflecteur. Pour cela une partie du faisceau réfléchi est dirigée vers un détecteur. Le signal résultant du détecteur sert de consigne aux asservissements pour garder le faisceau centré sur le rétro-réflecteur.

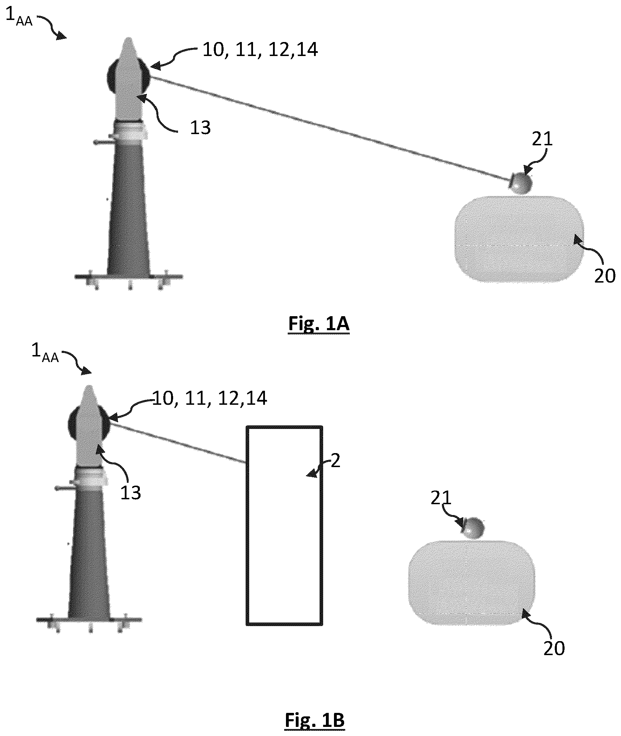

Les figures 1A et 1B schématisent un dispositif de positionnement d'une cible selon l'art antérieur. Le dispositif comporte :

- un émetteur laser 10, configuré pour émettre un faisceau laser incident vers un rétro-réflecteur 21 de type SMR, monté sur un objet 20 à contrôler ;
- un détecteur 11, configuré pour détecter le faisceau laser réfléchi par la cible ;
- une caméra 12, permettant une détection rapide de rétro-réflecteurs de type SMR
- un support 13, mobile en rotation, destiné à ajuster une position et une orientation de l'émetteur laser et du détecteur ;
- une unité de centrage 14, configurée pour analyser le signal détecté par le détecteur, et pour asservir la position et l'orientation du support en fonction du signal résultant du détecteur.

Une des contraintes d'utilisation d'un laser tracker est que l'objet à contrôler doit être en visée directe du laser, sans écran interposé entre le tracker et la cible. Or, l'objet à contrôler peut être situé dans une zone encombrée, ne permettant pas de disposer le tracker ou peu accessible à une personne . L'objet à contrôler peut également être disposé dans une zone dont l'ambiance est peu propice à un laser tracker : température et/ou humidité inadaptée, ou niveau d'irradiation élevée, ou présence d'un champ magnétique ou électrique pouvant perturber le laser tracker.

Dans les conditions listées dans le paragraphe précédent, le laser tracker doit être éloigné de l'objet à mesurer, avec une présence potentielle d'obstacles, par exemple des écrans ou cloisons de protection, entre le laser et l'objet à contrôler. Ce dernier n'est plus en visée directe du laser.

Le brevet EP1171752 adresse ce problème, et propose de disposer un support rigide, comportant un - rétro-réflecteur pouvant être déporté d'un objet à contrôler. La position de l'objet peut être déterminée indirectement en connaissant le déport du rétro réflecteur par rapport à l'objet. Mais cela suppose de disposer un support sur l'objet, et éventuellement de déplacer le support à la surface de l'objet, ce qui peut poser des contraintes opérationnelles. Il en est de même de US8958055.

Le brevet CN103499293 décrit une méthode permettant d'améliorer la précision d'un laser tracker par le recours à des miroirs disposés autour d'un objet à contrôler. Les miroirs sont configurés pour diriger le faisceau laser, émis par le laser tracker, en un même point de l'objet. Vu de l'objet, chaque image permet de former une image virtuelle du tracker. L'objectif est de tirer profit de la redondance des mesures réalisées en dirigeant le faisceau laser sur quatre miroirs, de façon à obtenir autant de mesures que de miroirs. Les quatre miroirs définissent quatre trajets optiques différents entre le tracker et l'objet à contrôler.

US2023099779 décrit un dispositif comportant un tracker laser configuré pour émettre un faisceau lumineux au centre d'un miroir, ce dernier renvoyant le faisceau vers un objet à contrôler.

Les inventeurs proposent un dispositif de suivi laser pouvant être mis en œuvre à distance d'un objet à contrôler, en l'absence d'une visée directe entre l'émetteur laser et l'objet.

**EXPOSE DE L'INVENTION**

Un premier aspect de l'invention est un dispositif de détermination d'une position d'un objet, l'objet comportant un rétro-réflecteur cible, le dispositif comportant :

- un émetteur laser, mobile en rotation sur un support, et configuré pour émettre un faisceau laser incident vers le rétro-réflecteur cible;
- un détecteur, configuré pour détecter un faisceau laser réfléchi par le rétro-réflecteur cible illuminé par le faisceau incident ;
- une unité de centrage, configurée pour ajuster une position de l'émetteur laser en fonction du faisceau laser détecté par le détecteur ;

le dispositif étant caractérisé en ce que :

- le dispositif comporte un miroir, comportant au moins un rétro-réflecteur auxiliaire, le miroir étant configuré pour réfléchir le faisceau laser incident vers le rétro-réflecteur cible ;
- l'unité de centrage est configurée pour

    • asservir une position du support en fonction du faisceau laser réfléchi par le rétro-réflecteur cible, puis par le miroir, de façon à diriger le faisceau laser incident vers le rétro-réflecteur cible ;
    • déterminer une position virtuelle du rétro-réflecteur cible, à travers le miroir ;

- le dispositif comporte une unité de traitement configurée pour

    • recevoir ou déterminer une position et orientation du miroir ;
    • déterminer une position réelle du rétro-réflecteur cible, en fonction de la position et de l'orientation du miroir, et de la position virtuelle du rétro-réflecteur cible, après que le faisceau laser incident a été centré par rapport au rétro-réflecteur cible.

Selon une possibilité :

- le miroir est plan ;
- le miroir comporte deux ou trois rétro-réflecteurs auxiliaires, définissant un plan du miroir ;
- l'unité de traitement est configurée pour

    • centrer l'émetteur laser successivement par rapport à chaque rétro-réflecteur auxiliaire ;
    • puis déterminer la position et l'orientation du miroir à partir de chaque faisceau respectivement réfléchi par chaque rétro-réflecteur auxiliaire.

Le dispositif peut comporter une caméra, dont l'axe optique est parallèle à un axe d'émission du faisceau laser, l'unité de centrage étant configurée pour détecter un rétro-réflecteur sur chaque image générée par la caméra.

Selon une possibilité :

- le miroir est mobile en rotation et/ou en translation par rapport à l'émetteur laser ;
- le dispositif comporte une unité de commande, configurée pour commander une rotation du miroir en fonction d'un signal de commande généré par l'unité de traitement.

L'unité de traitement peut être configurée pour piloter l'unité de commande, de façon que le réflecteur cible soit visible, par la caméra, à travers le miroir.

L'unité de traitement peut être configurée pour piloter l'unité de commande, de façon que le réflecteur cible soit disposé dans le champ d'observation de la caméra, à travers le miroir.

Avantageusement, le faisceau laser incident s'étend entre l'émetteur laser et le rétro-réflecteur cible selon un unique trajet optique. Cela signifie qu'il n'y a qu'un seul faisceau se propageant entre le laser et l'objet.

Le dispositif peut comporter plusieurs miroirs, en série, de façon que le faisceau soit renvoyé successivement par plusieurs miroirs jusqu'à l'objet.

Un deuxième aspect de l'invention est un procédé de détermination d'une position d'un objet, muni d'un rétro-réflecteur cible, en utilisant un dispositif selon le premier aspect de l'invention, le miroir étant orienté de façon que le faisceau incident, émis par l'émetteur laser, contourne un obstacle s'étendant entre l'objet et l'émetteur laser, le procédé comportant les étapes suivantes :

- a) asservissement d'une position du support en fonction du faisceau laser réfléchi par le rétro-réflecteur cible, puis par le miroir, de façon à centrer le faisceau laser incident par rapport au rétro-réflecteur cible ;
- b) suite à l'étape a), détermination d'une position du rétro-réflecteur cible en fonction de l'orientation du miroir.

Ainsi, le faisceau incident, émis par l'émetteur laser, contourne l'obstacle avant d'atteindre le rétro-réflecteur cible.

Le miroir peut comporter au moins un réflecteur auxiliaire ou au moins deux réflecteurs auxiliaires ou au moins trois rétro-réflecteurs auxiliaires, non alignés, définissant un plan du miroir, le procédé comportant, préalablement à l'étape a) :

- centrage de l'émetteur laser successivement par rapport au ou à chaque rétro-réflecteur auxiliaire ;
- détermination d'une position et orientation du miroir à partir de chaque faisceau laser respectivement réfléchi par chaque rétro-réflecteur auxiliaire.

Le miroir peut être mobile en rotation et/ou en translation par rapport à l'émetteur laser, auquel cas le procédé peut comporter, préalablement à l'étape a), une rotation et/ou une translation du miroir en fonction d'un signal de commande généré par l'unité de traitement.

La rotation du miroir peut être effectuée de façon à former une image du réflecteur cible, à travers le miroir, par la caméra.

L'invention sera mieux comprise à la lecture de l'exposé des exemples de réalisation présentés, dans la suite de la description, en lien avec les figures listées ci-dessous.

## FIGURES

Les figures 1A et 1B montrent une configuration de l'art antérieur.
La figure 2A montre une vue simplifiée d'un dispositif selon l'invention.
La figure 2B représente un miroir faisant partie du dispositif selon l'invention.
La figure 3A schématise le référentiel du tracker et le référentiel du miroir.
Les figures 3B à 3D illustrent des rotations successives pour passer du référentiel du miroir au référentiel du tracker.
La figure 4A montre les principales étapes pour positionner le réflecteur cible à l'aide du tracker.
La figure 4B montre le détail de l'étape 150 de la figure 4A.

## EXPOSE DE MODES DE REALISATION PARTICULIERS

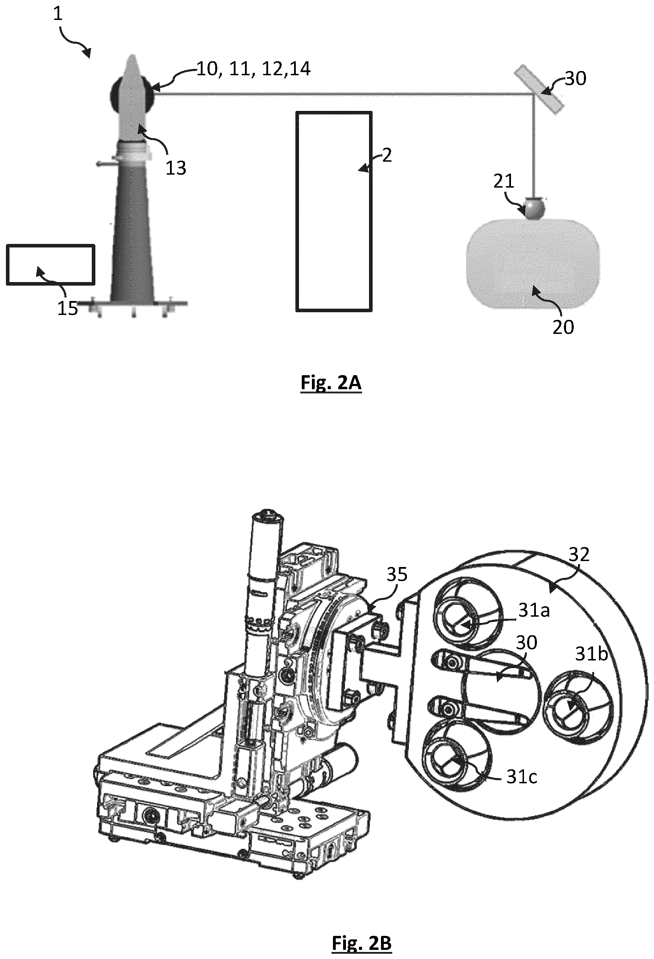

La figure 2A représente un dispositif 1 selon l'invention. Le dispositif comporte les mêmes composants que décrits en lien avec l'art antérieur. Le dispositif comporte un miroir 30, agencé entre l'émetteur laser 10 et l'objet 20 à contrôler. L'objet à contrôler est relié à un rétro-réflecteur cible 21. Le miroir 30 est configuré pour dévier le faisceau laser incident autour d'un obstacle 2, ce dernier s'étendant à travers une ligne de visée direct de l'émetteur laser. Par ligne de visée directe, on entend une ligne droite s'étendant entre l'émetteur laser et le rétro-réflecteur relié à l'objet à contrôler. Ainsi, le miroir est agencé pour établir un trajet optique contournant l'obstacle 2 s'étendant entre l'objet et l'émetteur laser.

Dans cet exemple, le dispositif comporte un détecteur 11, par exemple basé sur une cellule PSD (Position Sensitive Device - cellule sensible à la position) qui est un détecteur de position de faisceau. Si le faisceau n'atteint pas le rétro-réflecteur au centre, il n'atteint pas non plus la cellule PSD au centre, créant un signal d'erreur. Le signal d'erreur est représentatif d'un décalage entre la direction d'émission du faisceau laser incident et la direction selon laquelle le faisceau incident est réfléchi par le rétro-réflecteur cible disposé sur l'objet.

Le dispositif comporte de préférence une caméra 12, configurée pour former une image de la scène observée. L'unité de centrage 14 est alors programmée pour localiser des rétro-réflecteurs de type SMR à partir de l'image de la caméra. Cela permet un premier positionnement de chaque rétro-réflecteur, le positionnement plus précis étant obtenu en déplaçant progressivement le faisceau laser jusqu'au centre du réflecteur.

L'unité de centrage 14 comporte également des codeurs permettant d'enregistrer l'orientation du faisceau laser, ainsi que la distance parcourue par le faisceau jusqu'au rétro-réflecteur. Cette dernière peut être calculée par une mesure classique du temps de vol du faisceau laser entre son émission et sa détection par le détecteur 11.

Le dispositif comporte une unité de traitement 15, configurée pour effectuer des étapes de traitement décrites par la suite. L'unité de traitement comporte par exemple un microprocesseur

La figure 2B représente le miroir 30. Ce dernier est porté par un châssis 32, comportant trois rétroréflecteurs auxiliaires 31a, 31b et 31c de préférence non alignés. Chaque rétro-réflecteur auxiliaire peut être de même type que le rétro-réflecteur cible 21 disposé sur l'objet suivi 20. Le miroir peut être monté mobile en rotation et/ou en translation, la rotation et/ou la translation étant commandée par une unité de commande 35.

La présence de trois rétro-réflecteurs auxiliaires non alignés est avantageuse car elle permet une détermination, par mesure, de la position et de l'orientation du miroir, comme décrit par la suite. Selon une autre possibilité, le miroir comporte un ou deux rétroréflecteurs, ce qui peut nécessiter une autre information, par exemple un apriori, pour déterminer la position et l'orientation du miroir.

Un aspect important de l'invention est que le dispositif est agencé de façon que le faisceau laser incident, émis par l'émetteur laser 10, est réfléchi, vers l'objet 20, par le miroir 30. De façon symétrique, le miroir renvoie, vers le détecteur 11, le faisceau réfléchi par le rétro-réflecteur cible 21.

L'unité de centrage 14 est programmée pour asservir le support 13 de façon que le faisceau réfléchi parvienne au détecteur 11 en étant coaxial, ou pouvant être considéré comme tel, du faisceau incident. Plus le décalage spatial entre le faisceau incident et le faisceau réfléchi est faible, plus la position du rétro-réflecteur cible 21 est maîtrisée.

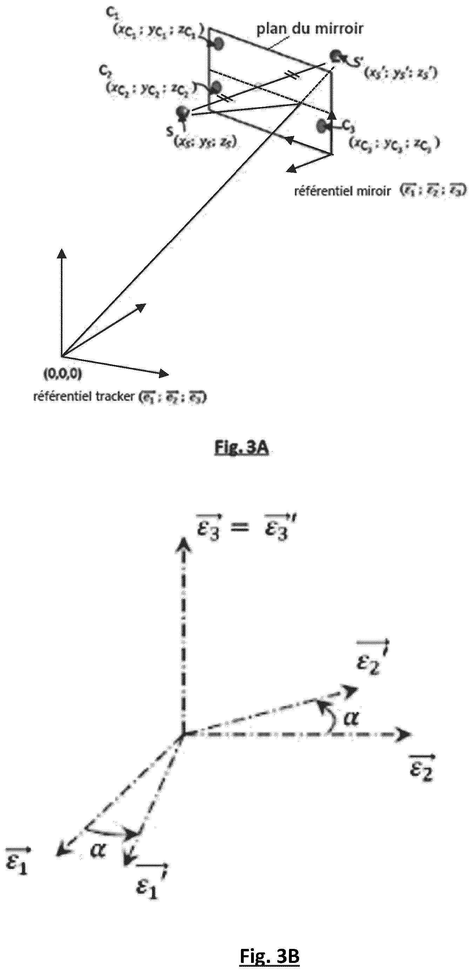

On se place dans un référentiel du dispositif, et défini par une base orthonormée $(\vec{e_1}, \vec{e_2}, \vec{e_3})$, représentée sur la figure 3A, centrée sur un point origine (0,0,0) fixe par rapport au support 13. Le point origine et la base orthonormée $(\vec{e_1}, \vec{e_2}, \vec{e_3})$ définissent un référentiel du dispositif R. On assigne au miroir 30 une base orthonormée $(\vec{\varepsilon_1}, \vec{\varepsilon_2}, \vec{\varepsilon_3})$, formant le référentiel du miroir $R_m$.

On désigne par $C_1$, $C_2$ et $C_3$ les coordonnées des centres respectifs des rétro-réflecteurs auxiliaires $21_1$, $21_2$ et $21_3$. Si $\vec{n}$ est le vecteur normal au plan du miroir,

$$\vec{n} = \overrightarrow{C_1C_2} \wedge \overrightarrow{C_1C_3} \ (1)$$

L'équation cartésienne du plan du miroir est :
$ax + by + cz + d = 0$ (2), $a$, $b$, $c$ et $d$ étant des scalaires, $x$, $y$ et $z$ étant des coordonnées dans le référentiel du dispositif.

$$\text{Avec } \vec{n} = \begin{pmatrix} a \\ b \\ c \end{pmatrix} (3)$$

$d$ peut être obtenu en appliquant (2) aux coordonnées de chaque point $C_1$, $C_2$ et $C_3$, ces dernières étant obtenues en pointant l'émetteur laser successivement au centre de chaque rétro-réflecteur auxiliaire.

Chaque vecteur $\vec{\varepsilon_1}$, $\vec{\varepsilon_2}$, et $\vec{\varepsilon_3}$ peut être tel que :

$$\vec{\varepsilon_1} = \overrightarrow{C_1C_2} \ (4)$$

$$\vec{\varepsilon_2} = \overrightarrow{C_1C_4}, \text{ avec } \overrightarrow{C_1C_4}, = \vec{n} \wedge \overrightarrow{C_1C_2} \ (5)$$

$$\vec{\varepsilon_3} = \vec{n} \ (6)$$

Sur la figure 3A, on a représenté les coordonnées du point réel S et de son image S' (ou objet virtuel) par le miroir, le point S correspondant au centre de la cible. Le point réel S correspond au centre du réflecteur cible 21.

Le tracker laser permet d'obtenir les coordonnées du point virtuel S', dans le référentiel du dispositif. On obtient ainsi la mesure

$$\begin{pmatrix} x_{s'} \\ y_{s'} \\ z_{s'} \end{pmatrix}_{(\vec{e_1}, \vec{e_2}, \vec{e_3})}$$

$$\begin{pmatrix} x_s \\ y_s \\ z_s \end{pmatrix}_{(\vec{e_1}, \vec{e_2}, \vec{e_3})}$$

Or, on recherche les coordonnées de S dans le référentiel du dispositif ; soit

Dans le référentiel du miroir :

$$\begin{pmatrix} x_s \\ y_s \\ z_s \end{pmatrix}_{(\overrightarrow{\varepsilon_1},\overrightarrow{\varepsilon_2},\overrightarrow{\varepsilon_3})} = \begin{pmatrix} x_{s'} \\ y_{s'} \\ z_{s'} \end{pmatrix}_{(\overrightarrow{\varepsilon_1},\overrightarrow{\varepsilon_2},\overrightarrow{\varepsilon_3})} \times \begin{pmatrix} 1 & 0 & 0 \\ 0 & 1 & 0 \\ 0 & 0 & -1 \end{pmatrix} (7)$$

Les coordonnées de chaque vecteur $\overrightarrow{\varepsilon_1}$, $\overrightarrow{\varepsilon_2}$, et $\overrightarrow{\varepsilon_3}$ s'expriment, dans la base $(\overrightarrow{e_1}, \overrightarrow{e_2}, \overrightarrow{e_3})$, comme suit :

$$\overrightarrow{\varepsilon_1} = u\overrightarrow{e_1} + v\overrightarrow{e_2} + w\overrightarrow{e_3} \ (8)$$

$$\overrightarrow{\varepsilon_2} = u'\overrightarrow{e_1} + v'\overrightarrow{e_2} + w'\overrightarrow{e_3} \ (9)$$

$$\overrightarrow{\varepsilon_3} = u''\overrightarrow{e_1} + v''\overrightarrow{e_2} + w''\overrightarrow{e_3} \ (10)$$

On peut former une matrice de passage

$$P = \begin{bmatrix} u & v & w \\ u' & v' & w' \\ u'' & v'' & w'' \end{bmatrix} (11)$$

Le passage entre les référentiels $(\overrightarrow{e_1}, \overrightarrow{e_2}, \overrightarrow{e_3})$ et $(\overrightarrow{\varepsilon_1}, \overrightarrow{\varepsilon_2}, \overrightarrow{\varepsilon_3})$, s'écrit :

$$(\overrightarrow{e_1}, \overrightarrow{e_2}, \overrightarrow{e_3}) = (\overrightarrow{\varepsilon_1}, \overrightarrow{\varepsilon_2}, \overrightarrow{\varepsilon_3}) \, P^{-1} \ (12)$$

$$\text{Avec } P^{-1} = \frac{1}{\det(P)} \times Adj(P) \ (13)$$

- $\det(P)$ est le déterminant de P
- $Adj(P)$ est la matrice adjointe de $P$

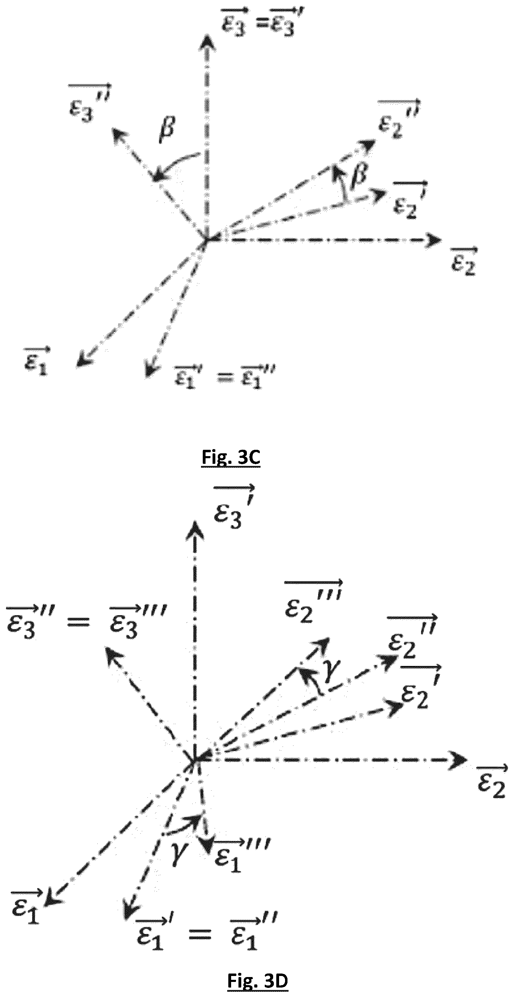

On peut définir trois matrices de rotation respectivement selon les angles d'Euler : $\alpha$ (angle de précession), $\beta$ (angle de nutation) et $\gamma$ (angle de rotation propre) définis respectivement sur les figures 3B, 3C et 3D. Les angles $\alpha$, $\beta$ et $\gamma$ sont calculés par l'unité de traitement 15 à partir des coordonnées des points $C_1$, $C_2$ et $C_3$.

Sur la figure 3B, on a représenté l'angle de précession $\alpha$ (ou premier angle d'Euler), selon lequel on effectue un changement de repère entre le repère $R_m (\overrightarrow{\varepsilon_1}, \overrightarrow{\varepsilon_2}, \overrightarrow{\varepsilon_3})$ et un premier repère intermédiaire $R_{m1} (\overrightarrow{\varepsilon_1'}, \overrightarrow{\varepsilon_2'}, \overrightarrow{\varepsilon_3'})$ avec $\overrightarrow{\varepsilon_3'} = \overrightarrow{\varepsilon_3}$. Le passage du repère $R_m$ au repère $R_{m1}$ s'effectue par une rotation $R_{\overrightarrow{\varepsilon_3},\alpha}$ selon l'angle $\alpha$, autour de l'axe $\overrightarrow{\varepsilon_3}$ :

$$R_{\overrightarrow{\varepsilon_3},\alpha} = \begin{bmatrix} \cos\alpha & -\sin\alpha & 0 \\ \sin\alpha & \cos\alpha & 0 \\ 0 & 0 & 1'' \end{bmatrix} (14)$$

Sur la figure 3C, on a représenté l'angle de nutation $\beta$ (ou deuxième angle d'Euler), selon lequel on effectue un changement de repère entre le premier repère intermédiaire $R_{m1} (\overrightarrow{\varepsilon_1'}, \overrightarrow{\varepsilon_2'}, \overrightarrow{\varepsilon_3'})$ et un deuxième repère intermédiaire $R_{m2}$ $(\overrightarrow{\varepsilon_1''}, \overrightarrow{\varepsilon_2''}, \overrightarrow{\varepsilon_3''})$ avec $\overrightarrow{\varepsilon_1''} = \overrightarrow{\varepsilon_1'}$. Le passage du repère $R_{m1}$ au repère $R_{m2}$ s'effectue par une rotation $R_{\overrightarrow{\varepsilon_1'},\beta}$, selon l'angle $\beta$, autour de l'axe $\overrightarrow{\varepsilon_1'}$ :

$$R_{\overrightarrow{\varepsilon_1'},\beta} = \begin{bmatrix} \cos\beta & 0 & \sin\beta \\ 0 & 1 & 0 \\ -\sin\beta & 0 & \cos\beta \end{bmatrix} (15)$$

Sur la figure 3D, on a représenté l'angle de rotation propre $\gamma$ (ou troisième angle d'Euler), selon lequel on effectue un changement de repère entre le deuxième repère intermédiaire $R_{m2} (\overrightarrow{\varepsilon_1''}, \overrightarrow{\varepsilon_2''}, \overrightarrow{\varepsilon_3''})$ et un troisième repère intermédiaire $R_{m3} (\overrightarrow{\varepsilon_1'''} \overrightarrow{\varepsilon_2'''}, \overrightarrow{\varepsilon_3'''})$ avec $\overrightarrow{\varepsilon_3'''} = \overrightarrow{\varepsilon_3''}$. Le passage du repère $R_{m2}$ au repère $R_{m3}$ s'effectue par une rotation $R_{\overrightarrow{\varepsilon_3''},\gamma}$, selon l'angle $\gamma$, autour de l'axe $\overrightarrow{\varepsilon_3''}$ :

$$R_{\overrightarrow{\varepsilon_{3''}},\gamma} = \begin{bmatrix} 1 & 0 & 0 \\ 0 & \cos\gamma & -\sin\gamma \\ 0 & \sin\gamma & \cos\gamma \end{bmatrix} (16)$$

On en déduit une matrice de rotation R, formée d'un produit matriciel des trois matrices définies dans (14) à (16).

$$R = R_{\overrightarrow{\varepsilon_3},\alpha} \times R_{\overrightarrow{\varepsilon_{1'}},\beta} \times R_{\overrightarrow{\varepsilon_{3''}},\gamma} (17)$$

La base $(\overrightarrow{\varepsilon_1'''}, \overrightarrow{\varepsilon_2'''}, \overrightarrow{\varepsilon_3'''})$ du troisième repère intermédiaire est parallèle à la base $(\overrightarrow{e_1}, \overrightarrow{e_2}, \overrightarrow{e_3})$, et centrée sur l'origine du repère du miroir $(\overrightarrow{\varepsilon_1}, \overrightarrow{\varepsilon_2}, \overrightarrow{\varepsilon_3})$. Le terme « base parallèle » correspond au fait que les vecteurs $\overrightarrow{\varepsilon_1'''}, \overrightarrow{\varepsilon_2'''}, \overrightarrow{\varepsilon_3'''}$ sont respectivement parallèles aux vecteurs $\overrightarrow{e_1}, \overrightarrow{e_2}, \overrightarrow{e_3}$. On passe du troisième repère intermédiaire $R_{m3}$ au repère du tracker par une translation $\overrightarrow{T}$ entre l'origine du référentiel du tracker laser et l'origine 0' du référentiel du miroir, l'origine 0' pouvant être l'un des rétro-réflecteurs.

$$\overrightarrow{T} = \begin{pmatrix} x_{0'} \\ y_{0'} \\ z_{0'} \end{pmatrix} (18)$$

Les coordonnées du centre S du réflecteur cible 21 dans le référentiel du dispositif s'obtient ainsi à partir des coordonnées dans le référentiel du miroir par l'expression :

$$\begin{pmatrix} x_s \\ y_s \\ z_s \end{pmatrix}_{(\overrightarrow{e_1},\overrightarrow{e_2},\overrightarrow{e_3})} = \begin{pmatrix} x_s \\ y_s \\ z_s \end{pmatrix}_{(\overrightarrow{\varepsilon_1},\overrightarrow{\varepsilon_2},\overrightarrow{\varepsilon_3})} \times R + \overrightarrow{T} (20)$$

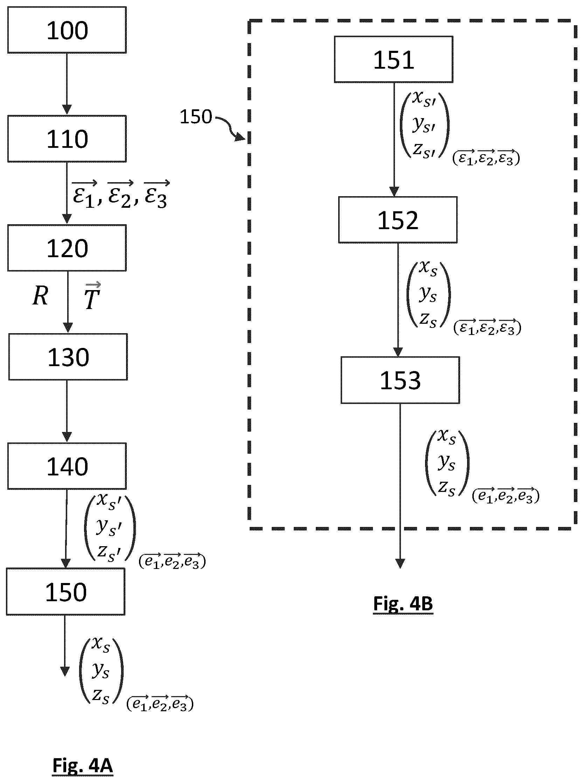

La figure 4A décrit les principales étapes de mise en œuvre d'un dispositif selon l'invention.

Etape 100 : vérification de la visée du tracker

Au cours de cette étape, on s'assure que le rétro-réflecteur cible 21 est bien dans le champ d'observation du tracker, à travers le miroir 30. Cette étape peut être effectuée en mettant en œuvre la caméra du tracker : on suppose que le champ d'observation de la caméra est similaire au champ d'observation du tracker. Selon une possibilité, en fonction de la position du rétro-réflecteur cible détectée par la caméra 12, l'unité de commande 35 du miroir 30 est activée, de façon à disposer le rétro-réflecteur cible 21 dans une partie centrale du miroir vu par le tracker. L'unité de commande 35 est alors pilotée par un signal de commande généré par l'unité de traitement 15.
Une fois que le rétro-réflecteur est dans le champ du tracker, le tracker est configuré pour diriger le faisceau laser au centre du rétro-réflecteur cible, et pour s'orienter de façon que le laser soit maintenu, par l'unité de centrage 14, au centre du rétro-réflecteur, par « auto lock » (verrouillage automatique)

Etape 110 : prise en compte de la position et de l'orientation du miroir

Il s'agit de définir les vecteurs $\overrightarrow{\varepsilon_1}, \overrightarrow{\varepsilon_2}, \overrightarrow{\varepsilon_3}$ du référentiel lié au miroir.
L'orientation du miroir peut être fixe et prédéfinie auquel cas les vecteurs $\overrightarrow{\varepsilon_1}, \overrightarrow{\varepsilon_2}, \overrightarrow{\varepsilon_3}$ sont préalablement stockés dans l'unité de traitement 15. Dans le cas contraire, les vecteurs $\overrightarrow{\varepsilon_1}, \overrightarrow{\varepsilon_2}, \overrightarrow{\varepsilon_3}$ sont déterminés expérimentalement, en dirigeant le tracker vers chaque rétro-réflecteur auxiliaire et en définissant successivement les points $C_1$, $C_2$ et $C_3$. Pour cela, la caméra 12 est mise en œuvre, de façon à détecter chaque rétro-réflecteur auxiliaire et diriger le faisceau laser successivement vers chaque rétro-réflecteur auxiliaire. La position précise du centre de chaque rétro-réflecteur auxiliaire est définie par le tracker laser asservi par l'unité de centrage 14.

Etape 120 : détermination de la matrice de passage et du vecteur de translation.

En fonction des vecteurs $\overrightarrow{\varepsilon_1}, \overrightarrow{\varepsilon_2}, \overrightarrow{\varepsilon_3}$, l'unité de traitement 15 calcule la matrice de passage $R$ et le vecteur de translation $\overrightarrow{T}$ tels qu'explicités dans (14) à (20).
Etape 130 : localisation du rétro-réflecteur cible 21 à travers le miroir 30. Au cours de cette étape, le faisceau laser est dirigé vers le miroir. Puis l'émetteur laser est asservi par l'unité de centrage 14, de façon à se boquer sur la position du centre du rétro-réflecteur cible 21.

<u>Etape 140</u> : détermination des coordonnées virtuelles du rétro-réflecteur cible, dans le référentiel du dispositif : il s'agit des coordonnées $\begin{pmatrix} x_s{'} \\ y_s{'} \\ z_s{'} \end{pmatrix}_{(\vec{e_1},\vec{e_2},\vec{e_3})}$ cf. figure 3A. Cette étape est mise en œuvre par l'unité de centrage 14. Elle peut également être mise en œuvre par l'unité de traitement 15.

<u>Etape 150</u> : détermination des coordonnées réelles $\begin{pmatrix} x_s \\ y_s \\ z_s \end{pmatrix}_{(\vec{e_1},\vec{e_2},\vec{e_3})}$ du rétro-réflecteur cible, dans le référentiel du dispositif. Cette étape est mise en œuvre par l'unité de traitement 15.

Cette étape peut comprendre les sous-étapes suivantes, représentées sur la figure 4B :

Sous-étape 151 : détermination des coordonnées du point virtuel S' dans le référentiel du miroir : on applique la relation

$$\begin{pmatrix} x_{s\prime} \\ y_{s\prime} \\ z_{s\prime} \end{pmatrix}_{(\vec{\varepsilon_1},\vec{\varepsilon_2},\vec{\varepsilon_3})} = \left( \begin{pmatrix} x_{s\prime} \\ y_{s\prime} \\ z_{s\prime} \end{pmatrix}_{(\vec{e_1},\vec{e_2},\vec{e_3})} - \vec{T} \right) \times R^{-1}$$

$R^{-1}$ peut être déterminé, à partir de $R$, selon (13) Sous-étape 152 : détermination des coordonnées du point S dans le référentiel du miroir : on applique la relation (7), de façon à obtenir $\begin{pmatrix} x_s \\ y_s \\ z_s \end{pmatrix}_{(\vec{\varepsilon_1},\vec{\varepsilon_2},\vec{\varepsilon_3})}$ à partir de $\begin{pmatrix} x_{s\prime} \\ y_{s\prime} \\ z_{s\prime} \end{pmatrix}_{(\vec{\varepsilon_1},\vec{\varepsilon_2},\vec{\varepsilon_3})}$ Sous-étape

153 : détermination des coordonnées de S dans le référentiel du dispositif, en appliquant (20) à partir de $\begin{pmatrix} x_s \\ y_s \\ z_s \end{pmatrix}_{(\vec{\varepsilon_1},\vec{\varepsilon_2},\vec{\varepsilon_3})}$

pour obtenir $\begin{pmatrix} x_s \\ y_s \\ z_s \end{pmatrix}_{(\vec{e_1},\vec{e_2},\vec{e_3})}$

L'invention pourra être mise en œuvre alors que l'objet à détecter est disposé dans une zone dont les conditions d'accès sont difficiles, en particulier du fait de l'encombrement, ou dont les conditions environnementales (température, humidité, irradiation) ne permettent de disposer le tracker directement en face de l'objet à contrôler.

**Revendications**

1. Dispositif de détermination d'une position d'un objet (20), l'objet comportant un rétro-réflecteur cible (21), le dispositif comportant :

   - un émetteur laser (10), mobile en rotation sur un support (13), et configuré pour émettre un faisceau laser incident vers le rétro-réflecteur cible;
   - un détecteur (11), configuré pour détecter un faisceau laser réfléchi par le rétro-réflecteur cible illuminé par le faisceau incident ;
   - une unité de centrage (14), configurée pour ajuster une position de l'émetteur laser en fonction du faisceau laser détecté par le détecteur ;
   - un miroir (30), configuré pour réfléchir le faisceau laser incident vers le rétro-réflecteur cible ; le dispositif étant **caractérisé en ce que** :
   - le miroir est plan;
   - le miroir comporte trois rétro-réflecteurs auxiliaires (31a, 31b, 31c), définissant un plan du miroir ;
   - l'unité de centrage (14) est configurée pour :

     • asservir une position du support en fonction du faisceau laser réfléchi par le rétro-réflecteur cible, puis par le miroir, de façon à diriger le faisceau laser incident vers le rétro-réflecteur cible ;

- déterminer une position virtuelle ( $\begin{pmatrix} x_s' \\ y_s' \\ z_s' \end{pmatrix}_{(\vec{e_1},\vec{e_2},\vec{e_3})}$ ) du rétro-réflecteur cible, à travers le miroir ;

- le dispositif comporte une unité de traitement (15) configurée pour

• centrer l'émetteur laser successivement par rapport à chaque rétro-réflecteur auxiliaire ;
• déterminer la position et l'orientation du miroir à partir de chaque faisceau respectivement réfléchi par chaque rétro-réflecteur auxiliaire ;

• déterminer une position réelle ( $\begin{pmatrix} x_s \\ y_s \\ z_s \end{pmatrix}_{(\vec{e_1},\vec{e_2},\vec{e_3})}$ ) du rétro-réflecteur cible, en fonction de la position et de l'orientation du miroir, et de la position virtuelle du rétro-réflecteur cible, après que le faisceau laser incident a été centré par rapport au rétro-réflecteur cible ;

2. Dispositif selon la revendication 1, comportant une caméra (12), dont l'axe optique est parallèle à un axe d'émission du faisceau laser, l'unité de centrage (14) étant configurée pour détecter un rétro-réflecteur sur chaque image générée par la caméra.

3. Dispositif selon l'une quelconque des revendications précédentes, dans lequel :

- le miroir est mobile en rotation et/ou en translation par rapport à l'émetteur laser ;
- le dispositif comporte une unité de commande (35), configurée pour commander une rotation du miroir (30) en fonction d'un signal de commande généré par l'unité de traitement.

4. Dispositif selon les revendications 2 ou 3, dans lequel l'unité de traitement (15) est configurée pour piloter l'unité de commande (35), de façon que le réflecteur cible soit visible, par la caméra, à travers le miroir.

5. Dispositif selon la revendication 4, dans lequel l'unité de traitement est configurée pour piloter l'unité de commande, de façon que le réflecteur cible soit disposé dans le champ d'observation de la caméra, à travers le miroir.

6. Dispositif selon l'une quelconque des revendications précédentes, configuré pour que le faisceau laser incident s'étend entre l'émetteur laser et le rétro-réflecteur cible selon un unique trajet optique.

7. Procédé de détermination d'une position d'un objet (20), muni d'un rétro-réflecteur cible (21), en utilisant un dispositif selon l'une quelconque des revendications précédentes, le miroir étant orienté de façon que le faisceau incident, émis par l'émetteur laser, contourne un obstacle (2) s'étendant entre l'objet et l'émetteur laser, le procédé comportant les étapes suivantes :

- a) asservissement d'une position du support en fonction du faisceau laser réfléchi par le rétro-réflecteur cible, puis par le miroir, de façon à centrer le faisceau laser incident par rapport au rétro-réflecteur cible ;
- b) suite à l'étape a), détermination d'une position du rétro-réflecteur cible en fonction de l'orientation du miroir.

8. Procédé selon la revendication 7, dans lequel le miroir comporte au moins trois rétro-réflecteurs auxiliaires (31a, 31b, 31c), non alignés, définissant un plan du miroir, le procédé comportant, préalablement à l'étape a) :

- centrage de l'émetteur laser successivement par rapport à chaque rétro-réflecteur auxiliaire ;
- détermination d'une position et orientation du miroir à partir de chaque faisceau laser respectivement réfléchi par chaque rétro-réflecteur auxiliaire.

9. Procédé selon la revendication 8, dans lequel le miroir est mobile en rotation et/ou en translation par rapport à l'émetteur laser, et dans lequel le procédé comporte, préalablement à l'étape a), une rotation et/ou une translation du miroir en fonction d'un signal de commande généré par l'unité de traitement.

**10.** Procédé selon la revendication 9, dans lequel la rotation du miroir est effectuée de façon à former une image du réflecteur cible, à travers le miroir, par la caméra.

**Fig. 1A**

**Fig. 1B**

**Fig. 2A**

**Fig. 2B**

**Fig. 3A**

**Fig. 3B**

**Fig. 3C**

**Fig. 3D**

100

↓

110

$\overrightarrow{\varepsilon_1}, \overrightarrow{\varepsilon_2}, \overrightarrow{\varepsilon_3}$

↓

120

$R \quad \vec{T}$

↓

130

↓

140

$\begin{pmatrix} x_{s\prime} \\ y_{s\prime} \\ z_{s\prime} \end{pmatrix}_{(\overrightarrow{e_1}, \overrightarrow{e_2}, \overrightarrow{e_3})}$

↓

150

$\begin{pmatrix} x_s \\ y_s \\ z_s \end{pmatrix}_{(\overrightarrow{e_1}, \overrightarrow{e_2}, \overrightarrow{e_3})}$

**Fig. 4A**

150 ⟶

151

$\begin{pmatrix} x_{s\prime} \\ y_{s\prime} \\ z_{s\prime} \end{pmatrix}_{(\overrightarrow{\varepsilon_1}, \overrightarrow{\varepsilon_2}, \overrightarrow{\varepsilon_3})}$

↓

152

$\begin{pmatrix} x_s \\ y_s \\ z_s \end{pmatrix}_{(\overrightarrow{\varepsilon_1}, \overrightarrow{\varepsilon_2}, \overrightarrow{\varepsilon_3})}$

↓

153

$\begin{pmatrix} x_s \\ y_s \\ z_s \end{pmatrix}_{(\overrightarrow{e_1}, \overrightarrow{e_2}, \overrightarrow{e_3})}$

↓

**Fig. 4B**

Europäisches
Patentamt

European
Patent Office

Office européen
des brevets

## RAPPORT DE RECHERCHE EUROPEENNE

**Numéro de la demande**

EP 25 18 9191

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2023/099779 A1 (REDGEWELL DUNCAN [CH] ET AL) 30 mars 2023 (2023-03-30) * abrégé; revendication 1; figure 17 * * alinéas [0184], [0295], [0300] - [0307] * ----- | 1-10 | INV. G01S7/48 G01S17/66 G01S17/46 |
| A,D | EP 1 171 752 B1 (LEICA GEOSYSTEMS AG [CH]) 6 juillet 2005 (2005-07-06) * abrégé; revendication 1; figure 1 * ----- | 1-10 | |
| A | US 8 958 055 B2 (BRIDGES ROBERT E [US]; BROWN LAWRENCE B [US] ET AL.) 17 février 2015 (2015-02-17) * abrégé; revendication 1; figure 1 * * colonne 6, lignes 1-48 * ----- | 1-10 | |

| | DOMAINES TECHNIQUES RECHERCHES (IPC) |
|---|---|
| | G01S |

Le présent rapport a été établi pour toutes les revendications

| Lieu de la recherche | Date d'achèvement de la recherche | Examinateur |
|---|---|---|
| Munich | 17 octobre 2025 | Mercier, Francois |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**       EP 25 18 9191

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-10-2025

| Document brevet cité au rapport de recherche | Date de publication | Membre(s) de la famille de brevet(s) | Date de publication |
|---|---|---|---|
| US 2023099779 A1 | 30-03-2023 | CN 114585875 A | 03-06-2022 |
| | | EP 4042104 A1 | 17-08-2022 |
| | | US 2023099779 A1 | 30-03-2023 |
| | | US 2024369348 A1 | 07-11-2024 |
| | | WO 2021069079 A1 | 15-04-2021 |
| EP 1171752 B1 | 06-07-2005 | AT E299266 T1 | 15-07-2005 |
| | | AU 3549100 A | 02-11-2000 |
| | | EP 1171752 A1 | 16-01-2002 |
| | | ES 2244414 T3 | 16-12-2005 |
| | | JP 2002542469 A | 10-12-2002 |
| | | US 6675122 B1 | 06-01-2004 |
| | | WO 0063645 A1 | 26-10-2000 |
| US 8958055 B2 | 17-02-2015 | US 7800758 B1 | 21-09-2010 |
| | | US RE45565 E | 16-06-2015 |
| | | US 2011001958 A1 | 06-01-2011 |
| | | US 2011007305 A1 | 13-01-2011 |
| | | US 2011007327 A1 | 13-01-2011 |
| | | US 2011170113 A1 | 14-07-2011 |
| | | US 2012050712 A1 | 01-03-2012 |
| | | US 2012099096 A1 | 26-04-2012 |
| | | US 2012099119 A1 | 26-04-2012 |
| | | US 2012327390 A1 | 27-12-2012 |
| | | US 2015211851 A1 | 30-07-2015 |
| | | US 2016069665 A1 | 10-03-2016 |
| | | US 2017023352 A1 | 26-01-2017 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1171752 A
- US 8958055 B
- CN 103499293
- US 2023099779 A